# EUROPÄISCHE PATENTANMELDUNG

(11) **EP 3 940 920 A1**
(43) Veröffentlichungstag der Anmeldung: **19.01.2022**
(21) Anmeldenummer: 20185450.2
(22) Anmeldetag: 13.07.2020
(51) Int. Cl.: H02J 50/10, H02J 50/12, H02J 50/40, H02J 50/80, H02J 50/90

(54) **ENERGIEÜBERTRAGUNGSMODUL, SENDEEINHEIT, ENERGIEÜBERTRAGUNGSSYSTEM UND VERFAHREN**

(71) Anmelder: Hilti Aktiengesellschaft, 9494 Schaan (LI)
(72) Erfinder: Schaer, Roland, 9472 Grabs (CH); Hornscheidt-Schrittwieser, Lukas, 8952 Schlieren (CH); Mugioiu, Dan, 8952 Schlieren (CH); Wegmann, Markus Christian, 8952 Schlieren (CH); Hüsser, Noah, 8952 Schlieren (CH)
(74) Vertreter: Hilti Aktiengesellschaft Corporate Intellectual Property

(57) **Zusammenfassung**

Die Erfindung betrifft ein Energieübertragungsmodul (14) zur Energieübertragung zu einem Mobilgerät (12), insbesondere einer Handwerkzeugmaschine, wobei die Energieübertragung drahtlos erfolgt, umfassend wenigstens eine erste und eine zweite Sendespule (20), wobei die erste Sendespule (20) mit einem ersten Wechselstrom und die zweite Sendespule (20) mit einem zweiten Wechselstrom betreibbar ist, wobei das Energieübertragungsmodul (14) derart eingerichtet ist, dass zumindest während einer Energieübertragungsphase des Energieübertragungsmoduls (14) der Betrag des relativen Phasenwinkels (beta) der in der ersten und der zweiten Sendespule (20) fließenden Ströme (itx1, itx2) nicht mehr als 45°, besonders bevorzugt nicht mehr als 15°, beträgt oder der relative Phasenwinkel (beta) minimiert wird. Des Weiteren betrifft die Erfindung eine Sendeeinheit (16), ein Energieübertragungssystem (10) sowie ein Verfahren (100) zum Betreiben wenigstens einer der vorgenannten Vorrichtungen. Die Erfindung ermöglicht eine besonders komfortable Energieübertragung zu einem oder mehreren Mobilgeräten (12), um beispielsweise Energiespeicher dieser Mobilgeräte (12) zu laden.

## Beschreibung

Die vorliegende Erfindung betrifft ein Energieübertragungsmodul zur Energieübertragung zu einem Mobilgerät. Des Weiteren betrifft die Erfindung eine Sendeeinheit für ein solches Energieübertragungsmodul, ein Energieübertragungssystem sowie ein Verfahren zum Betrieb eines Energieübertragungssystems, eines Energieübertragungsmoduls und/oder einer Sendeeinheit.

Um ein Mobilgerät, beispielsweise eine akkubetriebene Handwerkzeugmaschine, betreiben zu können, ist es in der Regel erforderlich, einen Energiespeicher des Mobilgeräts vorab aufzuladen. Dies erfolgt üblicherweise mittels eines speziell auf das Mobilgerät abgestimmten Energieübertragungssystems, mit dem das Mobilgerät zur Aufladung gekoppelt wird. Die Kopplung erfolgt bei manchen Mobilgeräten und den zugehörigen Energieübertragungssystemen drahtlos. Bei solchen Paaren aus Mobilgeräten und Energieübertragungssystemen bedarf es einer verhältnismäßig genauen Positionierung und Ausrichtung des Mobilgeräts relativ zum Energieübertragungssystem, um eine Energieübertragung beziehungsweise eine Aufladung durchführen zu können. Unzureichende Positionierungen und/oder Ausrichtungen können zu erheblichen, unerwünschten Störabstrahlungen führen. Dies ist für einen Benutzer des Mobilgeräts bzw. des Energieübertragungssystems insgesamt höchst unbefriedigend, wenn nicht in den jeweiligen Jurisdiktionen sogar unzulässig.

Aufgabe der vorliegenden Erfindung ist es daher, komfortabel nutzbare Vorrichtungen anzubieten, die eine Energieübertragung mit hoher Leistung zu einem Mobilgerät erlauben. Des Weiteren ist es eine Aufgabe der vorliegenden Erfindung, ein Verfahren zum Betrieb einer solchen Vorrichtung anzubieten, durch das sich ebenfalls eine Energieübertragung mit hoher Leistung erreichen lässt.

Gelöst wird die Aufgabe durch ein Energieübertragungsmodul zur Energieübertragung zu einem Mobilgerät, insbesondere einer Handwerkzeugmaschine, wobei die Energieübertragung drahtlos erfolgt, umfassend wenigstens eine erste und eine zweite Sendespule, wobei die erste Sendespule mit einem ersten Wechselstrom und die zweite Sendespule mit einem zweiten Wechselstrom betreibbar ist, wobei das Energieübertragungsmodul derart eingerichtet ist, dass zumindest während einer Energieübertragungsphase des Energieübertragungsmoduls der Betrag des relativen Phasenwinkels der in der ersten und der zweiten Sendespule fließenden Ströme nicht mehr als 45°, besonders bevorzugt nicht mehr als 15°, beträgt.

Vorzugsweise weisen die beiden Ströme einen relativen Phasenwinkel von 0° auf, d. h. die beiden Ströme sind zueinander in Phase.

Dementsprechend wird die Aufgabe dem gleichen erfinderischen Gedanken folgend auch durch ein Energieübertragungsmodul zur Energieübertragung zu einem Mobilgerät, insbesondere einer Handwerkzeugmaschine, wobei die Energieübertragung drahtlos erfolgt, umfassend wenigstens eine erste und eine zweite Sendespule, wobei die erste Sendespule mit einem ersten Wechselstrom und die zweite Sendespule mit einem zweiten Wechselstrom betreibbar ist, wobei das Energieübertragungsmodul eingerichtet ist, zumindest während einer Energieübertragungsphase des Energieübertragungsmoduls den Betrag des relativen Phasenwinkels der in der ersten und der zweiten Sendespule fließenden Ströme zu minimieren, gelöst.

Der Erfindung liegt dabei insgesamt der Gedanke zugrunde, dass sich durch eine zumindest weitgehende, gegebenenfalls vollständige, Synchronisation der Phasen der beiden Ströme der räumliche Energieübertragungsbereich, innerhalb dessen eine Energieübertragung zum Mobilgeräts durch zumindest eine der beiden Sendespulen erfolgen kann, vergrößern lässt. Störübertragungen zwischen den beiden Sendespulen und damit verbunden Verlustleistungen können reduziert werden. Die Anforderungen an die Genauigkeiten, mit denen das Mobilgerät relativ zum Energieübertragungsmodul positioniert und/oder ausgerichtet werden muss, lassen sich somit reduzieren, wodurch der Benutzungskomfort sowie die zulässigerweise übertragbare Leistung erheblich steigerbar sind. Dabei kann die Energieübertragung zum Mobilgerät über die erste und/oder die zweite Sendespule erfolgen. Die Energieübertragung kann insbesondere zur Aufladung eines Energiespeichers des Mobilgeräts dienen.

Durch den verhältnismäßig geringen, insbesondere verschwindend geringen, relativen Phasenwinkel können ferner Energieverluste bei der Energieübertragung verringert und der Wirkungsgrad der Energieübertragung gesteigert werden.

Das Energieübertragungsmodul kann insbesondere zur Energieübertragung zu einer Handwerkzeugmaschine, insbesondere mit einem wiederaufladbaren Energiespeicher, eingerichtet sein. Bevorzugt erfolgt die Energieübertragung zur Übertragung von zum Betrieb des Mobilgeräts erforderlicher Energie. Es kann insbesondere zur Übertragung hoher Leistungen, beispielsweise ab 0,1 kW und beispielsweise bis 2,5 kW, eingerichtet sein. Somit ist auch eine Verwendung des Energieübertragungsmoduls im Hochbau und/oder Tiefbau, beispielsweise zur Energieübertragung auf, insbesondere akkubetriebene, Bohrmaschinen, Bohrhämmer, Meißelmaschinen, Sägemaschinen, Messinstrumente für den Hochbau und/oder für den Tiefbau wie beispielsweise Totalstationen oder Rotationslaser und/oder einer beliebigen Kombination solcher Geräte besonders geeignet. Denkbar ist dabei, dass bei einer solchen Verwendung des Energieübertragungsmoduls gleichzeitig oder zumindest quasi-zeitgleich Energie zu mehreren dieser Mobilgeräte übertragen wird.

Die Energieübertragungsphase kann einem Zustand entsprechen, bei dem beide Sendespulen aktiv sind, sodass der relative Phasenwinkel bestimmbar ist. Das Energieübertragungsmodul kann allerdings auch eingerichtet sein, dass eine Energieübertragung auch möglich ist, wenn nur eine der beiden Sendespulen aktiv ist.

Störabstrahlungen lassen sich weiter vermeiden, wenn das Energieübertragungsmodul derart eingerichtet ist, dass sich zumindest während der Energieübertragungsphase die Effektivstromwerte der in der ersten und der zweiten Sendespule fließenden Ströme um nicht mehr als 10 Prozent, besonders bevorzugt um nicht mehr als 6 Prozent, und/oder um nicht mehr als 0,3 A unterscheiden. Besonders bevorzugt unterscheiden sich die Effektivwerte um weniger als 1 Prozent und können insbesondere gleich sein. Alternativ oder ergänzend können sich analog die Amplituden der Ströme und/oder von dem ersten und dem zweiten Wechselstrom zugeordneten Spannungen entsprechen oder zumindest um nicht mehr als 10 Prozent, besonders bevorzugt um nicht mehr als 1 Prozent, unterscheiden.

Die Leistung der Energieübertragung lässt sich besonders einfach steuern, wenn das Energieübertragungsmodul derart eingerichtet ist, dass zumindest während der Energieübertragungsphase die jeweils dem ersten und/oder dem zweiten Wechselstrom zugeordneten Spannungen pulsweitenmoduliert, vorzugsweise rechteckförmig oder zumindest im Wesentlichen rechteckförmig, sind. Insbesondere können über die jeweilige Pulsweite der jeweiligen zugeordneten Spannung die übertragene Effektiv-Leistung und der relative Phasenwinkel zwischen den durch die erste und die zweite Sendespule fließenden Strömen gesteuert werden. Der Phasenwinkel zwischen den beiden zugeordneten Spannungen kann anhand des zeitlichen Versatzes der Mitten der sich jeweils entsprechenden Pulse der jeweils zugeordneten Spannung bestimmbar und/oder einstellbar sein.

Die erste und die zweite Sendespule können in jeweils mindestens einen elektrischen Schwingkreis mit einer jeweiligen Resonanzfrequenz integriert sein. Vorzugsweise können sich die Resonanzfrequenzen der Schwingkreise um nicht mehr als 10 Prozent, besonders bevorzugt um nicht mehr als 1 Prozent, unterscheiden. Wenigstens einer der Schwingkreise kann die jeweilige Sendespule und eine elektrische Kapazität aufweisen. Durch Betreiben wenigstens einer der Sendespulen, vorzugsweise aller Sendespulen, in Resonanz können Störabstrahlungen, insbesondere auf Harmonischen der jeweiligen Resonanzfrequenz, reduziert oder sogar gänzlich vermieden werden. Auch können Scheinleistungen reduziert werden.

Ist wenigstens eine der Sendespulen und/oder sind vorzugsweise alle Sendespulen einzeln aktivierbar und deaktivierbar, so lassen sich erhebliche Energieeinsparungen erzielen und/oder Störabstrahlungen reduzieren, indem nur oder indem zumindest vorrangig diejenigen der Sendespulen aktiviert werden, in deren Nähe, insbesondere in deren räumlichen Energieübertragungsbereich, sich das Mobilgerät befindet. Dazu kann das Energieübertragungssystem eine Steuereinheit aufweisen, die zur Auswahl und insbesondere zur nachfolgenden Aktivierung und/oder Deaktivierung einer oder mehrerer der Sendespulen eingerichtet ist.

In den Rahmen der Erfindung fällt des Weiteren eine Sendeeinheit für ein erfindungsgemäßes Energieübertragungsmodul, wobei die Sendeeinheit wenigstens eine mit einem Wechselstrom ansteuerbare Sendespule und eine Kommunikationsschnittstelle aufweist, über die wenigstens eine Information über eine Soll-Phasenlage des in der Sendespule fließenden Stroms oder über einen relativen Soll-Phasenwinkel und/oder über eine Soll-Pulsbreite der Spannung und/oder ein Effektivwert des durch die Sendespule fließenden Stroms und/oder die Phasenlage des Stroms übertragbar ist. Mit einer solchen Sendeeinheit lässt sich der räumliche Energieübertragungsbereich, innerhalb dessen eine Energieübertragung zum Mobilgerät möglich ist, auf einfache Weise erweitern. Auch dadurch lässt sich der Komfort für einen Benutzer erhöhen. Die Kommunikationsschnittstelle kann als drahtlose und/oder als drahtgebundene Schnittstelle ausgebildet sein. Über die Kommunikationsschnittstelle, insbesondere wenn sie drahtgebunden ist, kann auch über die Sendespule zu übertragende Wirkleistung übertragbar sein. Beispielsweise kann die Kommunikationsschnittstelle als elektrisches Verbindungselement ausgebildet sein und/oder ein elektrisches Verbindungselement aufweisen. Die Kommunikationsschnittstelle kann einem Eingang des zur Sendespule gehörigen Wechselstroms entsprechen. Sie kann eingerichtet sein, einen Speisestrom, vorzugsweise einen Wechselstrom-Speisestrom in die Sendeeinheit einzuspeisen, wobei vorzugsweise der Wechselstrom, mit dem die Sendespule betreibbar ist, aus dem Speisestrom erzeugbar ist. Im Speisestrom kann die Soll-Phasenlage und/oder der relative Soll-Phasenwinkel codiert sein.

Die Kommunikationsschnittstelle kann auch eingerichtet sein, die Sendespule der Sendeeinheit zu aktivieren und/oder zu deaktivieren und/oder ein Aktivierungssignal und/oder ein Deaktivierungssignal zu übertragen, mit dem die Sendespule der Sendeeinheit aktivierbar und/oder deaktivierbar ist. Somit kann das Energieübertragungsmodul modulartig durch die Sendeeinheit erweiterbar sein.

Weist das Energieübertragungsmodul und/oder die Sendeeinheit wenigstens einen Verbinder zur gegenseitigen, insbesondere reversibel lösbaren, Verbindung auf, lässt sich der zur Energieübertragung geeignete Energieübertragungsbereich auf besonders einfache Weise vergrößern und/oder verkleinern. Beispielsweise können durch Kombination eines Energieübertragungsmoduls mit einer oder mehreren Sendeeinheiten mehrere Sendespulen innerhalb eines Vielecks, insbesondere innerhalb eines Rechtecks, angeordnet sein. So ist beispielsweise eine Anordnung denkbar, bei der im Endeffekt die Sendespulen des Energieübertragungsmoduls sowie der wenigstens einen Sendeeinheit in einer 3x3-Matrix angeordnet sind.

Das Energieübertragungsmodul und die wenigstens eine Sendeeinheit können in einem Master-Slave-Verhältnis stehen. Dabei kann das Energieübertragungsmodul als Master und die wenigstens eine Sendeeinheit als Slave fungieren. Insbesondere kann das Energieübertragungsmodul ausgebildet sein, als Master eine Phasenlage und/oder eine Stärke des Stroms und/oder der Spannung, mit der die wenigstens eine Sendespule der Sendeeinheit betreibbar ist, zu steuern.

In den Rahmen der Erfindung fällt des Weiteren ein Energieübertragungssystem, umfassend wenigstens ein erfindungsgemäßes Energieübertragungsmodul und wenigstens eine erfindungsgemäße Sendeeinheit. Ein solches Energieübertragungssystem kann modular aufgebaut sein. Der räumliche Energieübertragungsbereich, in dem eine Energieübertragung zu einem Mobilgerät stattfinden kann, lässt sich somit modular vergrößern und/oder verkleinern.

Insbesondere ist denkbar, Energie zu einem oder zu mehreren Mobilgeräten zeitgleich oder zumindest quasi-zeitgleich zu übertragen. Dabei ist insbesondere denkbar, dass jeweils ein Mobilgerät von jeweils einem eigenen Satz von ein oder mehreren der Sendespulen des Energieübertragungssystems mit Energie versorgbar ist. Um Störabstrahlungen zu reduzieren, können ein oder mehrere der Sendespulen, insbesondere in Abhängigkeit von der Lage und/oder der Position wenigstens eines der Mobilgeräte, selektiv aktivierbar und/oder selektiv deaktivierbar sein.

In den Rahmen der Erfindung fällt auch ein Verfahren zum Betrieb eines erfindungsgemäßen Energieübertragungssystems, eines erfindungsgemäßen Energieübertragungsmoduls und/oder einer erfindungsgemäßen Sendeeinheit, wobei das Energieübertragungssystem, das Energieübertragungsmodul und/oder die Sendeeinheit insgesamt zumindest zwei, jeweils mittels eines Wechselstroms betreibbare Sendespulen aufweisen, wenigstens umfassend die Schritte
a. Detektion und Lokalisation eines Mobilgerätes;
b. Aktivierung wenigstens einer der Sendespulen in Abhängigkeit der Detektion und/oder der Lokalisation des Mobilgeräts;
c. Überwachen einer übertragenen Wirkleistung zumindest einer aktivierten Sendespule und/oder, sofern zumindest die zwei Sendespulen aktiviert sind, eines relativen Phasenwinkels der in der ersten und der zweiten Sendespule fließenden Ströme.

Zur Bestimmung und/oder Überwachung des relativen Phasenwinkels kann auf eine Referenzphase, beispielsweise des durch eine bestimmte der aktivierten Sendespulen hindurchfließenden Stroms, Bezug genommen werden.

Dem erfindungsgemäßen Verfahren liegt dabei der Gedanke zugrunde, einen möglichst großen räumlichen Energieübertragungsbereich anzubieten, in dem eine Energieübertragung zu einem oder mehreren Mobilgeräten möglich ist und dadurch die Anforderungen an die Genauigkeiten zur Positionierung und/oder zur Ausrichtung des wenigstens einen Mobilgeräts relativ zum Energieübertragungssystem, -modul und/oder zur Sendeeinheit zu reduzieren.

Dazu kann zunächst eine Vielzahl von Sendespulen bereitgestellt werden.

Das wenigstens eine Mobilgerät wird detektiert und lokalisiert.

Es können dann dem Mobilgerät ausreichend nahe gelegene Sendespulen aktiviert werden. Verhältnismäßig weit vom Mobilgerät entfernte Sendespulen können deaktiviert werden.

Anschließend können die Lage und/oder die Position des Mobilgeräts überwacht werden. Dies kann über die Stärke eines Eingangsstroms, einer Leistung und/oder über den relativen Phasenwinkel erfolgen.

Vorzugsweise können Sendespulen verwendet werden, die einen kleineren Sendebereich aufweisen als ein Empfangsbereich wenigstens einer Empfangsspule des Mobilgeräts. Mit anderen Worten können die Größenverhältnisse und/oder die Abstrahlcharakteristiken der Sendespulen und/oder die Empfangscharakteristik der wenigstens einen Empfangsspule derart gewählt sein und/oder werden, dass Energie von mehreren Sendespulen auf die wenigstens eine Empfangsspule übertragbar ist.

Eine kontinuierliche Energieübertragung, selbst nach Verlagerung des Mobilgeräts, zumindest innerhalb des Energieübertragungsbereichs, lässt sich erzielen, wenn zusätzlich zur Aktivierung gemäß dem zweiten Schritt wenigstens eine inaktive Sendespule aktiviert wird. Vorzugsweise wird dabei eine bislang inaktive Sendespule aktiviert, die aktuell dem Mobilgerät möglichst nahe gelegen ist.

Um eine geeignete, derzeit inaktive Sendespule zeitsparend zu ermitteln, können die inaktiven Sendespulen zyklisch durchprobiert werden. Dies lässt sich einfach erreichen, indem, vorzugsweise nacheinander, diejenige inaktive Sendespule aktiviert wird, die jeweils am längsten inaktiv gewesen ist. Die Aktivierung kann dazu lediglich so kurzzeitig erfolgen, dass ermittelbar ist, ob eine Energieübertragung von der jeweils aktivierten Sendespule zum Mobilgerät möglich ist oder nicht. Dieses Prinzip lässt sich weiter verfeinern, indem zunächst eine Untergruppe inaktiver Sendespulen ausgewählt wird, innerhalb derer die jeweils am längsten inaktive Sendespule aktiviert wird. Beispielsweise können zunächst nur die aktuell aktivierten Sendespulen benachbarten, inaktiven Sendespulen aktiviert und insbesondere überprüft werden.

Durch eine Verlagerung des Mobilgeräts kann dieses den Sendebereich einer der Sendespulen verlassen. Somit lassen sich auch Energie einsparen und Störstrahlungen vermeiden, wenn eine aktive Sendespule während der Überwachung gemäß dem Schritt c deaktiviert wird.

Ein Auswahlkriterium hierzu kann darin bestehen, dass diejenige aktive Sendespule deaktiviert wird, deren übertragene Wirkleistung von allen jeweils aktiven Sendespulen am geringsten ist und/oder deren übertragene Wirkleistung eine Mindestwirkleistung unterschreitet.

Bevorzugt kann die dem Wechselstrom zugeordnete Spannung pulsweitenmoduliert werden.

Zur Steuerung der Energieübertragung kann das Verfahren vorsehen, dass ein Phasenwinkel und/oder ein Tastverhältnis wenigstens einer zugeordneten Spannung eingestellt wird.

Die Größe des Energieübertragungsbereichs lässt sich bedarfsgerecht anpassen, indem ein weiteres Energieübertragungsmodul und/oder eine weitere Sendeeinheit mit dem Energieübertragungssystem, dem Energieübertragungsmodul und/oder respektive der Sendeeinheit gekoppelt wird. Insbesondere lässt sich hierdurch auf besonders einfache Weise ein großflächiges System zur Energieübertragung, insbesondere zum Aufladen von Energiespeichern ein oder mehrerer Mobilgeräte, aufbauen.

Eine weitere Komfortsteigerung lässt sich erzielen, wenn eine Zustandsinformation des Mobilgeräts vom Mobilgerät an das Energieübertragungssystem, das Energieübertragungsmodul und/oder respektive die Sendeeinheit übertragen wird. Die Zustandsinformation kann beispielsweise einer Information über einen Ladezustand, beispielsweise eine Zellspannung, des Energiespeichers des Mobilgeräts entsprechen. Die Übertragung kann drahtlos erfolgen. Dazu kann das Mobilgerät ein Kommunikationsmodul aufweisen. Das Kommunikationsmodul kann ein drahtloses und bevorzugt energetisch sparsames Kommunikationsprotokoll wie beispielsweise »Bluetooth Low Energy» oder «Zigbee», verwenden. Vorzugsweise weist das Energieübertragungssystem ein entsprechendes Kommunikationsmodul auf, das besonders bevorzugt dasselbe Kommunikationsprotokoll verwendet wie das Kommunikationsmodul des Mobilgeräts.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- **Fig. 1**: ein Energieübertragungssystem mit mehreren Mobilgeräten in schematischer Darstellung;
- **Fig. 2**: ein vereinfachtes Prinzipschaltbild eines Energieübertragungsmoduls mit einem daran angekoppelten Mobilgerät;
- **Fig. 3a**: ein Spannungs-Zeit-Diagramm in schematischer Darstellung;
- **Fig. 3b**: ein Strom-Zeit-Diagramm in schematischer Darstellung und
- **Fig. 4**: ein Flussdiagramm eines Verfahrens.

Zur Erleichterung des Verständnisses der Erfindung werden in den nachfolgenden Figuren für sich funktionell entsprechende Elemente jeweils die gleichen Bezugszeichen verwendet.

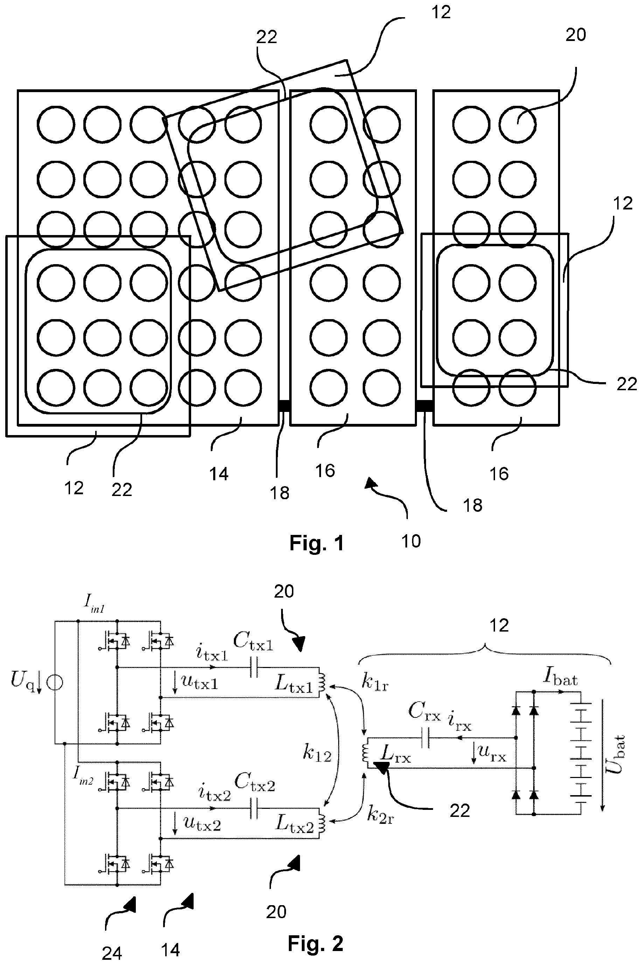

**Fig. 1** zeigt ein Energieübertragungssystem **10,** auf dem zur Energieübertragung ein oder mehrere, in Fig. 1 beispielhaft drei, Mobilgeräte **12** angeordnet sind. Insbesondere sollen Energiespeicher der Mobilgeräte 12 mittels des Energieübertragungssystems 10 aufgeladen werden. Die Mobilgeräte 12 können beispielsweise akkubetriebene Bohrhämmer, Meißelmaschinen, Bohrmaschinen oder andere akkubetriebene Handwerkzeugmaschinen oder ein Akkublock für eine solche Maschine sein.

Das Energieübertragungssystem 10 weist ein Energieübertragungsmodul **14** sowie zwei Sendeeinheiten **16** auf. Über Kommunikationsschnittstellen **18** sind die Sendeeinheiten 16 mit dem Energieübertragungsmodul 14 gekoppelt.

Die Kommunikationsschnittstellen 18 weisen elektrische Verbindungselemente, insbesondere Steckverbinder sowie komplementär ausgebildete Buchsen auf. Über die Kommunikationsschnittstellen 18 können die Sendeeinheiten 16 von dem Energieübertragungsmodul 14 mit elektrischer Energie versorgt werden. Zudem kann eine Information über eine Soll-Phasenlage über die Kommunikationsschnittstellen 18 vom Energieübertragungsmodul 14 zur jeweiligen Sendeeinheit 16 übertragen werden. Insbesondere kann über die Kommunikationsschnittstelle 18 wenigstens ein Speisestrom vom Energieübertragungsmodul 14 zu den Sendeeinheiten 16 übertragen werden. Durch eine Phasenlage des Speisestroms kann eine jeweilige Soll-Phasenlage codiert sein. Beispielsweise kann die Phasenlage des Speisestroms der jeweils einzustellenden bzw. zu erreichenden Soll-Phasenlage entsprechen.

Das Energieübertragungsmodul 14 sowie die Sendeeinheiten 16 weisen jeweils mehrere Sendespulen **20** auf, von denen zur Vereinfachung der Darstellung lediglich eine Sendespule 20 mit einem Bezugszeichen markiert ist. Die Sendespulen 20 sind jeweils im Energieübertragungsmodul 14 bzw. in den jeweiligen Sendeeinheiten 16 flächig, insbesondere matrixförmig, verteilt angeordnet.

Die Mobilgeräte 12 sind insbesondere für eine elektromagnetische, insbesondere induktive, Ankopplung an das Energieübertragungssystem 10 eingerichtet. Die Mobilgeräte 12 weisen jeweils eine Empfangsspule **22** auf. Die Empfangsspulen 22 sind eingerichtet, von wenigstens einer der Sendespulen 20 abgestrahlte Energie zu empfangen, sofern sie sich in einem jeweiligen räumlichen Energieübertragungsbereich der jeweiligen Sendespule 20 befinden.

Zu erkennen ist, dass die Mobilgeräte 12 auf dem Energieübertragungssystem 10, insbesondere zur Energieübertragung, frei platziert und frei ausgerichtet sind.

Auch ist zu erkennen, dass die Empfangsspulen 22 jeweils eine größere Fläche überspannen als jeweils eine der Sendespulen 20. Mit anderen Worten sind die Empfangsspulen 22 größer als die Sendespulen 20. Insbesondere sind die Empfangsspulen 22 größer als die jeweiligen räumlichen Energieübertragungsbereiche der jeweiligen Sendespulen 20. Beispielsweise überspannen das in Fig. 1 am weitesten links platzierte Mobilgerät 12 und insbesondere dessen Empfangsspule 22 neun Sendespulen 20.

Das Energieübertragungssystem 10 ist modular aufgebaut. Weitere Sendeeinheiten (in Fig. 1 nicht dargestellt) und vorzugsweise weitere Energieübertragungsmodule (in Fig. 1 ebenfalls nicht dargestellt) lassen sich mittels der Kommunikationsschnittstelle 18 an das Energieübertragungsmodul 14 anschließen, sodass das Energieübertragungssystem 10 und insbesondere der Energieübertragungsbereich des Energieübertragungssystems 10 vergrößert werden. Auch können eine oder beide Sendeeinheiten 16, insbesondere von der Kommunikationsschnittstelle 18, abgekoppelt werden, sodass das Energieübertragungssystem 10 und insbesondere sein Energieübertragungsbereich verkleinert werden.

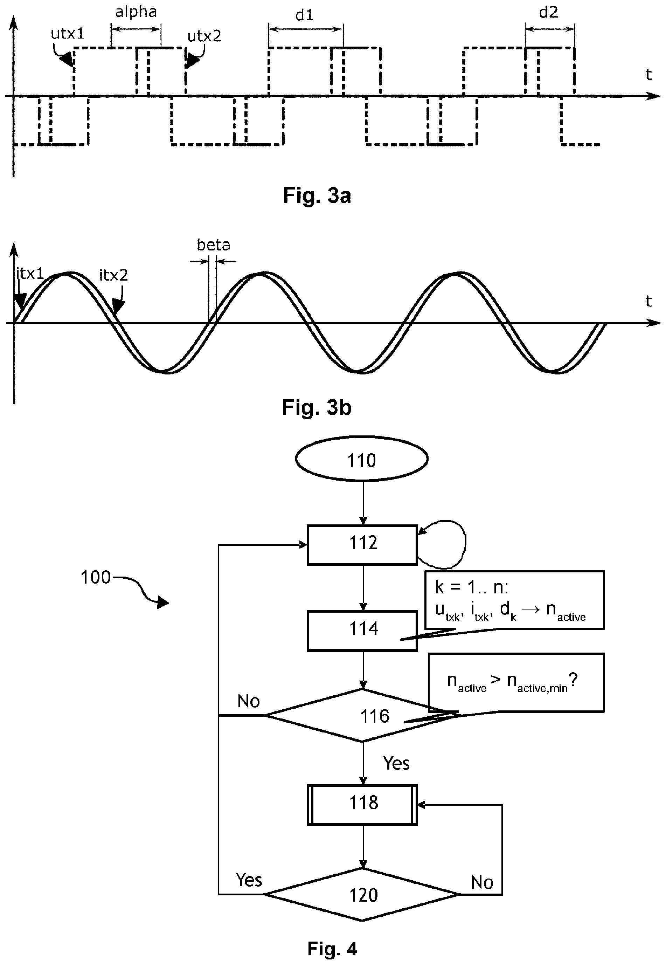

Das Energieübertragungssystem 10, insbesondere sein Energieübertragungsmodul 14, weist - jeweils in Fig. 1 nicht dargestellt - eine programmierbare Steuereinheit mit einer Speichereinheit, in der Programmcode zur Ausführung des in Bezug auf Fig. 4 noch näher zu beschreibenden, erfindungsgemäßen Verfahrens ausführbar abgelegt ist, und mit mittels Programmcode steuerbare, elektrische Schaltelemente auf. Die Steuereinheit ist insbesondere eingerichtet, die Sendespulen 20 gemäß dem erfindungsgemäßen Verfahren anzusteuern. Denkbar ist, dass alternativ oder ergänzend die Sendeeinheiten 16 jeweils entsprechend eingerichtete, eigene Steuereinheiten zur Steuerung ihrer jeweiligen Sendespulen 20 aufweisen. Eine Synchronisation der Steuerungen durch die Steuereinheiten kann in diesem Fall über die Kommunikationsschnittstellen 18 erfolgen.

Der schaltungstechnische Aufbau des Energieübertragungsmoduls 14 und der Sendeeinheiten 16 wird im Folgenden anhand eines vereinfachten Ausführungsbeispiels näher erläutert.

**Fig. 2** zeigt ein vereinfachtes Prinzipschaltbild eines Energieübertragungsmoduls 14 mit zwei mit einem ersten und einem zweiten Wechselstrom betreibbaren Sendespulen 20 und deren Sende-Induktivitäten **Ltx1** und **Ltx2.**

Das Energieübertragungsmodul 14 und die Sendeeinheiten 16 sowie die Mobilgeräte 12 des vorangehenden Ausführungsbeispiels weisen einen zu dem nun zu beschreibenden Ausführungsbeispiel analogen Aufbau auf.

Ein Mobilgerät 12 ist über die Sendespulen 20 mit dem Energieübertragungsmodul 14 zur Energieübertragung induktiv gekoppelt. Dazu weist das Mobilgerät 12 eine Empfangsspule 22 mit einer Empfangs-Induktivität **Lrx** auf. Die Sende-Induktivität Lrx ist mit einem Kopplungsfaktor **k1r** beziehungsweise **k2r** mit den Sende-Induktivitäten Ltx1 beziehungsweise Ltx2 gekoppelt. Zwischen den Sende-Induktivitäten Ltx1 und Ltx2 besteht eine, vorzugsweise geringe, Kopplung mit einem Kopplungsfaktor **k12.**

Die Sende-Induktivitäten Ltx1 und Ltx2 sowie die Empfangs-Induktivität Lrx sind in jeweils separate Schwingkreise eingebunden. Die Schwingkreise weisen dazu Kapazitäten **Ctx1, Ctx2** beziehungsweise **Crx** auf. Alle Schwingkreise weisen die gleiche Resonanzfrequenz auf.

Die Energieversorgung der Sende-Induktivitäten Ltx1 und Ltx2 erfolgt über einen Gleichspannungs-Wechselspannungswandler **24,** von dem vereinfachend nur einzelne Bauelemente, insbesondere Leistungshalbleiter, in dem Prinzipschaltbild gemäß Fig. 2 abgebildet sind.

Der Gleichspannungs-Wechselspannungswandler 24 wird von einer Spannungsquelle mit der Speisespannung **Uq** gespeist. Die Speisespannung Uq beträgt 24 V. Der Gleichspannungs-Wechselspannungswandler 24 erzeugt Spannungen **utx1** und **utx2.** Dazu nimmt er Eingangsströme **lin1** und **lin2** auf.

Die Schwingkreise der Sendespulen 20 werden von Strömen **itx1** beziehungsweise **itx2** durchflossen.

Durch induktive Energieübertragung werden im Schwingkreis des Mobilgeräts 12 eine Induktionsspannung **urx** und ein Induktionsstrom **irx** erzeugt. Mit der Induktionsspannung urx und/oder dem Induktionsstrom irx kann, wie beispielhaft in Fig. 2 dargestellt, über eine Gleichrichterschaltung, insbesondere Leistungsdioden aufweisend, ein Energiespeicher mit der Ladespannung **Ubat** und dem Ladestrom **Ibat** aufgeladen werden.

Alternativ oder ergänzend kann die Aufladung des Energiespeichers auch durch andere Verschaltungen, insbesondere eine Ladesteuerungsschaltung aufweisend, erfolgen. Denkbar ist auch, dass weitere und/oder andersartige Funktionsgruppen des Mobilgeräts 12 mittels der Induktionsspannung urx und/oder dem Induktionsstrom irx mit Energie versorgbar sind.

Die durch das Energieübertragungsmodul 14, insbesondere in Verbindung mit dem Mobilgerät 12, erreichte maximale Ladeleistung beträgt in diesem Ausführungsbeispiel 100 W. Der Ladestrom Ibat beträgt 5 A und die Ladespannung Ubat beträgt 20 V.

Zudem weist das Energieübertragungssystem 10, insbesondere das Energieübertragungsmodul 14 und für jede der Sendespulen 20, ebenfalls aus Vereinfachungsgründen in Fig. 1 nicht dargestellte Analog-Digital-Wandler-Einheiten auf. Mittels der Analog-Digital-Wandler-Einheiten können die Eingangsströme lin1, lin2, die Spannungen utx1, utx2 und/oder die Ströme itx1, itx2 digitalisierbar und/oder messbar sein.

**Fig. 3a** zeigt in schematischer Darstellung den zeitlichen Verlauf der Spannungen utx1 und utx2. Beide Spannungen utx1 und utx2 sind Rechteck-Wechselspannungen. Sie weisen einen rechteckförmigen oder einen zumindest im Wesentlichen rechteckförmigen Spannungsverlauf auf. Die Spannung utx1 weist eine Pulsbreite **d1** auf. Die Spannung utx2 weist eine Pulsbreite **d2** auf. Durch die Pulsbreiten d1 und/oder d2 in Verbindung mit den Frequenzen der Spannungen utx1 respektive utx2 ergeben sich jeweils spezifisch einstellbare Tastverhältnisse der Spannungen utx1, utx2. Die Spannungen utx1 und utx2 weisen relativ zueinander einen Phasenwinkel **alpha** auf. Der Phasenwinkel alpha kann dazu als relative zeitliche Differenz, beispielsweise ausgedrückt als Anteil im Verhältnis zu einer Periodendauer, der jeweiligen Mittelpunkte zwischen einer jeweiligen steigenden Flanke und der zugehörigen nächstfolgenden fallenden Flanke der positiven Halbwelle der jeweiligen der Spannungen utx1, utx2 gemessen sein.

Die Amplituden der Spannungen utx1 und utx2 sind in diesem Ausführungsbeispiel gleich groß oder sie sind zumindest im Wesentlichen gleich groß.

**Fig. 3b** stellt- ebenfalls in schematischer Darstellung - einen zu den Spannungen utx1, utx2 gemäß Fig. 3a gehörigen zeitlichen Verlauf der Ströme itx1 und itx2 dar.

Zu erkennen ist insbesondere, dass die Ströme itx1 und itx2 relativ zueinander einen relativen Phasenwinkel **beta** aufweisen. Der relative Phasenwinkel beta kann dabei als relative zeitliche Differenz, beispielsweise ausgedrückt als Anteil im Verhältnis zu einer Periodendauer, zweier unmittelbar aufeinanderfolgender gleichgerichteter Nulldurchgänge des jeweiligen Stroms itx1, itx2 gemessen sein.

Der relative Phasenwinkel beta beträgt weniger als 15°.

Die Frequenzen der Ströme itx1 und itx2 stimmen überein oder stimmen zumindest im Wesentlichen überein.

Auch die Effektivwerte der Ströme itx1 und itx2 stimmen überein oder stimmen zumindest im Wesentlichen überein.

**Fig. 4** zeigt nun ein Verfahren **100** zum Betrieb des Energieübertragungssystems 10.

Im Folgenden wird das Verfahren 100 unter Bezug auf die in den vorangehenden Fig. 1, Fig. 2, Fig. 3a und Fig. 3b beschriebenen Elemente und unter Rückgriff auf die dort verwendeten Bezugszeichen näher erläutert.

Das Verfahren 100 wird insbesondere zur Steuerung der Sendespulen 20 des Energieübertragungsmoduls 14 und der Sendeeinheiten 16 angewandt.

Es umfasst folgende Schritte:
Auf einen Startschritt **110,** während dem das Energieübertragungssystem 10 in einen allgemeinen Betriebszustand versetzt wird, folgt zunächst ein Warteschritt **112.**

Im Warteschritt 112 wird nach Ablauf einer vorbestimmten Zeitdauer, beispielsweise 5 Sekunden, nach Beginn des Warteschritts 112 ein Suchschritt **114** ausgelöst. Während dieser Wartezeit kann das Energieübertragungssystem 10 oder zumindest eines seiner Elemente in einen, insbesondere energiesparenden, Ruhezustand versetzt sein.

Der Suchschritt 114 dient zur Detektion und Lokalisation wenigstens eines im Energieübertragungsbereich des Energieübertragungssystem 10 befindlichen Mobilgerätes 12. Die Detektion und die Lokalisation erfolgen dabei indirekt dadurch, dass bestimmt wird, ob sich und gegebenenfalls bei welchen Sendespulen 20 eine Empfangsspule 22 innerhalb eines Energieübertragungsbereichs der jeweiligen Sendespule 20 befindet.

Die Detektion einer Empfangsspule 22 erfolgt dabei durch sequenzielle Prüfung der zu den Sendespulen 20 gehörigen Schwingkreise auf Verstimmung.

Im Einzelnen werden dazu innerhalb des Suchschritts 114 sequenziell für jede einzelne von insgesamt **n** Sendespulen 20 bzw. für jeden einzelnen von n zugehörigen Schwingkreisen folgende Teilschritte ausgeführt, wobei mit **k** die Indexnummer des jeweiligen Schwingkreises bezeichnet sei und die Bezugszeichen **link, utxk, itxk** und **dk** analog zu lin1, utx1, itx1 und d1 in Bezug auf eine mit Index k bezeichnete Sendespule 20 und dem dazugehörigen Schwingkreis zu verstehen sind:
114.1 Schwingkreis k wird mit einem Tastverhältnis von 1% aktiviert. Dazu wird seine Spannung utxk auf dieses Tastverhältnis von 1% und der diesem Tastverhältnis zugehörigen Pulsbreite dk eingestellt. Die Frequenz der Spannung utxk wird auf die Resonanzfrequenz des Schwingkreises k eingestellt.
114.2 Es wird ein Abklingen eventueller Transienten eines zugehörigen Stroms itxk abgewartet. Dazu wird beispielsweise eine vordefinierte Zeitdauer gewartet.
114.3 Der Strom itxk wird gemessen und mit einem vordefinierten Grenzwert verglichen.
114.4 Das Ergebnis des Vergleichs wird zwischengespeichert.
114.5 Der Schwingkreis k wird deaktiviert, indem die Spannung utxk abgeschaltet wird.

Abschließend werden die zwischengespeicherten Vergleichsergebnisse ausgewertet und insbesondere die Anzahl **n_{active}** der durch das oder die Mobilgeräte 12 belegten und daher zu aktivierenden Sendespulen 20 in Form der Anzahl positiver Vergleichsergebnisse gezählt.

Denkbar ist, dass in diesem Schritt eine Typidentifikation erfolgt, sodass lediglich Mobilgeräte 12 eines oder mehrerer bestimmter Typen berücksichtigt werden. Dies ermöglicht es auch, Störobjekte, beispielsweise metallische Fremdkörper, auf die keine Energie übertragen werden soll, zu detektieren und auszusondern. Dazu ist es auch denkbar, bei Detektion eines Störobjekts die betreffenden Sendespulen 20 nicht zu aktivieren oder zu deaktivieren.

Dazu ist auch denkbar, dass das Energieübertragungsmodul (14) und/oder die Sendeeinheit (16) eingerichtet sind, eine Typidentifikation oder eine Störobjektidentifikation durchzuführen.

In einem nachfolgenden Prüfschritt **116** wird geprüft, ob die Anzahl nactive eine vordefinierte Mindestanzahl **nactive,min** überschreitet. Die Mindestanzahl nactive,min kann beispielsweise 1 betragen. Eine höhere Mindestanzahl nactive,min kann dabei gewählt sein, um die Messfehlertoleranz bei der Detektion und Lokalisation des bzw. der Mobilgeräte 12 zu verbessern.

Ist die Anzahl nactive zu gering, beispielsweise, weil sich kein Mobilgerät 12 im Energieübertragungsbereich des Energieübertragungssystems 10 befindet, wird das Verfahren 100 mit dem Warteschritt 112 fortgesetzt. Damit wartet das Energieübertragungssystem 10 beispielsweise auf aufzuladende Mobilgeräte 12.

Anderenfalls wird das Verfahren 100 mit einem Energieübertragungsschritt **118** fortgesetzt.

Der Energieübertragungsschritt 118 dient zur eigentlichen Energieübertragung auf das oder die Mobilgeräte 12.

Der Energieübertragungsschritt 118 ist eingerichtet, dass die Ströme itxk aller aktiven Sendespulen 20 beziehungsweise aller zugehörigen Schwingkreise dahingehend geregelt werden, dass sie möglichst gleiche Effektivstromwerte aufweisen oder dass zumindest deren paarweise Effektivstromwertdifferenzen einen maximalen, vorbestimmten Maximalstromdifferenzwert, beispielsweise 0,3 A, unterschreiten. Vorzugsweise werden die Ströme itxk aller aktiven Sendespulen 20 zusätzlich dahingehend geregelt, dass die Ströme itxk in Phase sind oder dass zumindest die paarweise gemessenen, relativen Phasenwinkel beta einen maximalen, vorbestimmten Soll-Phasenwinkel, beispielsweise 15°, unterschreiten.

Ein weiteres Regelungsziel des Energieübertragungsschritts 118 ist vorzugsweise, alle Ströme itxk bei zumindest weitgehender Aufrechterhaltung der gesamten Energieübertragungsleistung zu minimieren, um Streufelder zu vermeiden.

Der Energieübertragungsschritt 118 ist ferner eingerichtet, dass wenigstens eine der Sendespulen 20 in Abhängigkeit der vorangehenden Detektion und/oder der Lokalisation des oder der Mobilgeräte 12 aktiviert wird.

Die Wirkleistung wenigstens einer der aktivierten Sendespulen 20 wird überwacht. Insbesondere werden Die Stärke wenigstens eines Stromes itxk und/oder wenigstens einer der jeweils relativ zu einem Bezugs-Strom gemessenen relativen Phasenwinkel beta der Ströme itxk wenigstens einer der aktivierten Sendespulen 20 überwacht.

Wird über eine der aktivierten Sendespulen 20 über einen bestimmten Zeitraum hinweg eine zu geringe Wirkleistung übertragen, so wird vorzugsweise diese Sendespule 20 deaktiviert. Insbesondere kann jeweils diejenige bislang aktive Sendespule 20 mit Indexnummer k deaktiviert werden, deren übertragene Wirkleistung von allen jeweils aktiven Sendespulen 20 am geringsten ist und/oder deren übertragene Wirkleistung eine Mindestwirkleistung unterschreitet. Dies kann beispielsweise vorkommen, wenn das oder die Mobilgeräte 12 während der Energieübertragung verlagert werden.

Des Weiteren kann vorgesehen sein, dass inaktive Sendespulen 20, insbesondere in regelmäßigen zeitlichen Abständen, dahingehend geprüft werden, ob sich in ihrem jeweiligen Energieübertragungsbereich ein Mobilgerät 12 bzw. eine Empfangsspule 22 befindet. Dazu wird vorzugsweise diejenige inaktive Sendespule 20 probeweise aktiviert und überprüft, die jeweils am längsten inaktiv gewesen ist. Eine solche bislang inaktive Sendespule 20 wird bei positiver Überprüfung sodann aktiviert. Auch dies kann beispielsweise vorkommen, wenn das oder die Mobilgeräte 12 während der Energieübertragung verlagert werden.

Zur Regelung der Ströme itxk ist im Energieübertragungsschritt 118 vorgesehen, die jeweiligen Phasenwinkel alpha und/oder die Tastverhältnisse, insbesondere durch Einstellen der zugehörigen Pulsweiten dk, einzustellen.

Im Einzelnen sind im Energieübertragungsschritt 118 folgende Teilschritte vorgesehen:
118.1 Aktivieren aller nactive im Schritt 114 erkannten Sendespulen 20, d. h. Aktivieren der Sendespulen 20 in Abhängigkeit von der Detektion und/oder der Lokalisation des wenigstens einen Mobilgeräts 12. Dazu Setzen eines Sollwerts der Gesamtenergieübertragungsleistung, beispielsweise 100 W;
118.2 Messen der Effektivwerte aller Ströme itxk aller aktiven Sendespulen 20 und der relativen Phasenwinkel beta;
118.3 Prüfen, ob alle Regelungsziele, insbesondere relative Phasenwinkel beta und Effektivstromwertdifferenzen, für alle Ströme itxk bzw. alle aktiven Sendespulen 20 erfüllt sind;
118.4 Falls alle Regelungsziele gemäß 118.3 erfüllt sind und falls der Mittelwert aller Effektivwerte aller Ströme itxk aller aktiven Sendespulen 20 einen Maximalgesamtstromwert, beispielsweise 4,5 A, überschreitet:
   118.4.1 Deaktivieren wenigstens einer nicht mehr benötigten, bislang aktiven Sendespule 20. Dazu insbesondere Deaktivieren derjenigen Sendespulen 20, deren übertragene Wirkleistung eine vorbestimmte Minimalwirkleistung, beispielsweise 6 W, unterschreitet.
   118.4.2 In einem vorgegebenen Rhythmus, beispielsweise sekündlich, probeweises Aktivieren einer der bislang inaktiven Sendespulen 20, insbesondere der jeweils am längsten inaktiven Sendespule 20.;
118.5 Falls wenigstens eines der Regelungsziele gemäß 118.3 über eine vorbestimmte Zeitdauer hinweg, beispielsweise 2 Sekunden, dauerhaft nicht erfüllt ist:
   118.5.1 Deaktivieren wenigstens einer bislang aktiven Sendespule 20. Dazu insbesondere Deaktivieren derjenigen Sendespule 20 mit der geringsten bezogenen Leistung und/oder mit der geringsten übertragenen Wirkleistung.
118.6 Ermitteln neuer Steuerparameter:
   118.6.1 Berechnen einer Gesamtenergieübertragungsleistung als Summe der von den einzelnen Sendespulen 20 abgegebenen Leistungen;
   118.6.2 Bestimmen einer Referenz-Sendespule durch Wahl der Sendespule 20 mit der größten übertragenen Wirkleistung.
   Im Folgenden werden Parameter dieser Referenz-Sendespule mit Index ref bezeichnet;
   118.6.3 Schrittweises Anpassen der Pulsweite d_{ref} der Spannung utxref der Referenz-Sendespule in Abhängigkeit der Differenz der Gesamtenergieübertragungsleistung von dem Sollwert der Gesamtenergieübertragungsleistung, sofern die Differenz eine Relevanzschwelle, beispielsweise 5 W, überschreitet;
   118.6.4 Für jede der übrigen, aktiven Sendespulen 20:
      118.6.4.1 Schrittweises Anpassen ihres Phasenwinkels alpha, falls ihr Effektivstromwert des Strom itxk von dem Effektivstromwert des Stroms itxref der Referenz-Sendespule über eine Relevanzschwelle, beispielsweise 0,1 A, hinaus abweicht;
      118.6.4.2 Schrittweises Anpassen ihrer Pulsweite dk, falls ihr Phasenwinkel beta relativ zur Referenz-Sendespule über eine Relevanzschwelle, beispielsweise 5°, hinaus abweicht;
118.7 Setzen der im Teilschritt 118.6 neu ermittelten Steuerparameter, insbesondere der relativen Phasenwinkel alpha sowie der Tastverhältnisse bzw. der zugehörigen Pulsweiten dk, zur Einstellung von Pulsweitenmodulationsgeneratoren, durch die die Gleichspannungs-Wechselspannungswandler 24 zur Erzeugung der Spannungen utxk angesteuert werden.

Zur Messung der Gesamtenergieübertragungsleistung werden Mittelwerte der Eingangsströme link gemessen, mit der Speisespannung Uq multipliziert und die ermittelte Leistung um Verlustleistungen, insbesondere in Form von ohmschen Verlustleistungen, korrigiert.

Die Messung der Eingangsströme link und der Ströme itxk erfolgt durch schnelle Abtastung mittels der Analog-Digital-Wandler-Einheiten, beispielsweise mit einem Takt von ca. 5 MHz. Dabei wird jeweils eine vorbestimmte Anzahl von Messwerten, beispielsweise 58 Messwerte, jeder Messgröße, also insbesondere der Eingangsströme link und der Ströme itxk, für jede zu messende Sendespule 20 erfasst und dann zur nächsten zu messenden Sendespule 20 weitergegangen. Um Leck-Effekte zu vermeiden, wird über ein ganzzahliges Vielfaches der Periodendauer hinweg abgetastet. Die Messungen werden immer am Beginn einer neuen Periode der Spannung utxref der Referenzspule begonnen, um einen einheitlichen zeitlichen Bezugspunkt zu gewährleisten und um relative Phasenwinkel beta berechnen zu können.

Die Bestimmung der Effektivstromwerte und der relativen Phasenwinkel beta erfolgt vereinfachend aus den erhaltenen Messwerten auf Basis einer Fourier-Reihenentwicklung erster Ordnung.

Abschließend wird in einem Entscheidungsschritt **120** die insgesamt übertragene Wirkleistung überprüft. Erreicht sie mindestens eine vordefinierte Mindestgesamtwirkleistung, beispielsweise 0,02 kW, so wird das Verfahren 100 mit Teilschritt 118.2 des Energieübertragungsschritts 118 fortgesetzt. Anderenfalls kehrt das Verfahren 100 wieder zum Warteschritt 112 zurück.

Somit erfolgt eine Energieübertragung solange, bis die Gesamtenergieübertragungsleistung und damit die von den Mobilgeräten 12 insgesamt abgenommene Leistung ein vordefiniertes Minimum unterschreitet.

## Patentansprüche

1. **Energieübertragungsmodul** (14) zur Energieübertragung zu einem Mobilgerät (12), insbesondere einer Handwerkzeugmaschine, wobei die Energieübertragung drahtlos erfolgt, umfassend wenigstens eine erste und eine zweite Sendespule (20), wobei die erste Sendespule (20) mit einem ersten Wechselstrom und die zweite Sendespule (20) mit einem zweiten Wechselstrom betreibbar ist, wobei das Energieübertragungsmodul (14) derart eingerichtet ist, dass zumindest während einer Energieübertragungsphase des Energieübertragungsmoduls (14) der Betrag des relativen Phasenwinkels (beta) der in der ersten und der zweiten Sendespule (20) fließenden Ströme (itx1, itx2) nicht mehr als 45°, besonders bevorzugt nicht mehr als 15°, beträgt.

2. **Energieübertragungsmodul** (14) zur Energieübertragung zu einem Mobilgerät (12), insbesondere einer Handwerkzeugmaschine, wobei die Energieübertragung drahtlos erfolgt, umfassend wenigstens eine erste und eine zweite Sendespule (20), wobei die erste Sendespule (20) mit einem ersten Wechselstrom und die zweite Sendespule (20) mit einem zweiten Wechselstrom betreibbar ist, wobei das Energieübertragungsmodul (14) eingerichtet ist, zumindest während einer Energieübertragungsphase des Energieübertragungsmoduls (14) den Betrag des relativen Phasenwinkels (beta) der in der ersten und der zweiten Sendespule (20) fließenden Ströme (itx1, itx2) zu minimieren.

3. Energieübertragungsmodul nach einem der vorhergehenden Ansprüche, **dadurch gekennzeichnet, dass** das Energieübertragungsmodul (14) derart eingerichtet ist, dass sich zumindest während der Energieübertragungsphase die Effektivstromwerte der in der ersten und der zweiten Sendespule (20) fließenden Ströme (itx1, itx2) um nicht mehr als 10 Prozent, besonders bevorzugt um nicht mehr als 6 Prozent, und/oder um nicht mehr als 0,3 A unterscheiden.

4. Energieübertragungsmodul nach einem der vorhergehenden Ansprüche, **dadurch gekennzeichnet, dass** das Energieübertragungsmodul (14) derart eingerichtet ist, dass zumindest während der Energieübertragungsphase jeweils dem ersten und/oder dem zweiten Wechselstrom zugeordnete Spannungen (utx1, utx2) pulsweitenmoduliert, vorzugsweise rechteckförmig oder zumindest im Wesentlichen rechteckförmig, sind.

5. Energieübertragungsmodul nach einem der vorhergehenden Ansprüche, **dadurch gekennzeichnet, dass** die erste Sendespule (20) und die zweite Sendespule (20) in jeweils mindestens einen elektrischen Schwingkreis mit einer jeweiligen Resonanzfrequenz integriert sind, wobei sich die Resonanzfrequenzen um nicht mehr als 10 Prozent, vorzugsweise um nicht mehr als 1 Prozent, unterscheiden.

6. Energieübertragungsmodul nach einem der vorhergehenden Ansprüche, **dadurch gekennzeichnet, dass** wenigstens eine der Sendespulen (20) einzeln aktivierbar und deaktivierbar ist.

7. **Sendeeinheit** (16), insbesondere für ein Energieübertragungsmodul (14) nach einem der vorhergehenden Ansprüche, **dadurch gekennzeichnet, dass** die Sendeeinheit (16) wenigstens eine mit einem Wechselstrom betreibbare Sendespule (20) und eine Kommunikationsschnittstelle (18) aufweist, über die wenigstens eine Information über eine Soll-Phasenlage des in der Sendespule (20) fließenden Stroms (itx1, itx2) oder über einen relativen Soll-Phasenwinkel übertragbar ist.

8. **Energieübertragungssystem** (10), umfassend wenigstens ein Energieübertragungsmodul (14) nach einem der Ansprüche 1 bis 6 und wenigstens eine Sendeeinheit (16) nach Anspruch 7.

9. **Verfahren** (100) zum Betrieb eines Energieübertragungssystems (10) nach Anspruch 8, eines Energieübertragungsmoduls (14) nach einem der Ansprüche 1 bis 6 und/oder einer Sendeeinheit (16) nach Anspruch 7, wobei das Energieübertragungssystem (10), das Energieübertragungsmodul (14) und/oder die Sendeeinheit (16) insgesamt zumindest zwei, jeweils mittels eines Wechselstroms betreibbare Sendespulen (20) aufweisen, wenigstens umfassend die Schritte (110, 112, 114, 116, 118, 120):
a. Detektion und Lokalisation eines Mobilgerätes (12);
b. Aktivierung wenigstens einer der Sendespulen (20) in Abhängigkeit der Detektion und/oder der Lokalisation des Mobilgeräts (12);
c. Überwachen einer übertragenen Wirkleistung zumindest einer aktivierten Sendespule (20) und/oder, sofern zumindest die zwei Sendespulen (20) aktiviert sind, eines relativen Phasenwinkels (beta) der in der ersten und der zweiten Sendespule (20) fließenden Ströme (itx1, itx2).

10. Verfahren nach dem vorangehenden Anspruch, **dadurch gekennzeichnet, dass** zusätzlich zur Aktivierung gemäß Schritt b wenigstens eine inaktive Sendespule (20) aktiviert wird.

11. Verfahren nach dem vorangehenden Anspruch, **dadurch gekennzeichnet, dass** diejenige inaktive Sendespule (20) aktiviert wird, die jeweils am längsten inaktiv gewesen ist.

12. Verfahren nach einem der Ansprüche 9 bis 11, **dadurch gekennzeichnet, dass** eine aktive Sendespule (20) während der Überwachung gemäß Schritt c deaktiviert wird.

13. Verfahren nach dem vorangehenden Anspruch, **dadurch gekennzeichnet, dass** diejenige aktive Sendespule (20) deaktiviert wird, deren übertragene Wirkleistung von allen jeweils aktiven Sendespulen (20) am geringsten ist und/oder deren übertragene Wirkleistung eine Mindestwirkleistung unterschreitet.

14. Verfahren nach einem der Ansprüche 9 bis 13, **dadurch gekennzeichnet, dass** ein Phasenwinkel (alpha) zwischen wenigstens zwei den jeweiligen Wechselströmen zugeordneten Spannungen (utx1, utx2) und/oder ein Tastverhältnis wenigstens einer aktiven Sendespule (20), vorzugsweise aller aktiven Sendespulen (20), eingestellt wird.

15. Verfahren nach einem der Ansprüche 9 bis 14, **dadurch gekennzeichnet, dass** ein weiteres Energieübertragungsmodul (14) und/oder eine weitere Sendeeinheit (16) mit dem Energieübertragungssystem (10), dem Energieübertragungsmodul (14) und/oder der Sendeeinheit (16) gekoppelt wird.
